# EUROPÄISCHE PATENTANMELDUNG

(11) **EP 3 681 141 A1**
(43) Veröffentlichungstag der Anmeldung: **15.07.2020**
(21) Anmeldenummer: 19151567.5
(22) Anmeldetag: 14.01.2019
(51) Int. Cl.: H04N 1/60

(54) **VERFAHREN ZUR VERBESSERUNG DER ANWENDUNGSSICHERHEIT FARBVERBINDLICHER PRÜFDRUCKE**

(71) Anmelder: GMG GmbH & Co. KG, 72072 Tübingen (DE)
(72) Erfinder: Hoffstadt, Johannes, 89077 Ulm (DE)
(74) Vertreter: Rausch Wanischeck-Bergmann Brinkmann

(57) **Zusammenfassung**

Die Erfindung betrifft ein Verfahren zur Herstellung eines farbverbindlichen Prüfdruckes in Form eines digitalen Proofs, wobei in einem vorgegebenen Druckbereich in wenigstens zwei aneinandergrenzenden Flächen ein Druck mit jeweils einer Farbe eines metameren Farbensatzes eingearbeitet wird.

## Beschreibung

Die vorliegende Erfindung betrifft ein Verfahren zur Verbesserung der Prüfbarkeit farbverbindlicher Prüfdrucke.

Prüfdrucke sind dem Stand der Technik bekannt. Es ist bekannt, dass ein beliebiges Layout auf einer gegebenen Druckmaschine, die nach einem der bekannten Druckverfahren wie Hochdruck, Tiefdruck, Offsetdruck und dergleichen arbeitet, eine bestimmte farbliche Erscheinung hat. Diese ergibt sich aus dem Druckverfahren, den verwendeten Druckfarben, dem Druckträger und dergleichen.

Während es früher unumgänglich war, zur Farbkontrolle das vorgesehene Layout auf einer artgleichen Druckmaschine auszudrucken, was einen gewaltigen wirtschaftlichen und zeitlichen Aufwand bedeutet hat, ist es seit Jahren bekannt, mittels einfacher Digitaldrucker wie zum Beispiel Inkjet-Druckern farbverbindliche Prüfdrucke zu erstellen.

Zu diesem Zweck werden die Farbräume der Druckmaschine einerseits und des Digitaldruckers andererseits in eine Beziehung gesetzt, so dass sich die Layouts farberhaltend umrechnen lassen. Man spricht auch von einem digitalen Proof.

Zur Kontrolle der Umrechnung werden bei farbverbindlichen digitalen Proofs auch einige einfarbige Testfelder mit ausgedruckt, die ermöglichen, die Qualität des Proofs durch Messung mit handelsüblichen Farbmessgeräten einzuschätzen (ISO 12647-7). Damit kann jeder Anwender, der solche Geräte besitzt, einen vorliegenden Proof verifizieren.

Gleichwohl wirkt sich auch das bei der Betrachtung des Proofs gewählte Licht auf die Erscheinung und damit die Qualität des Proofs aus.

Genau genommen wird die Umrechnung für eine bestimmte Lichtqualität, in erster Linie repräsentiert durch die wellenlängenabhängige Strahlungsverteilung, durchgeführt. In der Graphischen Industrie ist das die Standard-Tageslichtart D50. Darum wird zur Abmusterung oft ein D50-Simulator verwendet (ISO 3664:2009). Wird eine beliebige Lichtquelle verwendet, z. B. konventionelle Bürobeleuchtung, ist die Erscheinung des Proofs unter Umständen nicht mehr authentisch, das heißt, der Farbeindruck kann stark verfälscht sein, obwohl es sich augenscheinlich ebenso um weißes Licht handelt.

Ausgehend vom vorbeschriebenen Stand der Technik liegt der Erfindung die **AUFGABE** zugrunde, ein Verfahren und Proofs bereitzustellen, womit ein Bezug eines digitalen Proofs zu dem vorausgesetzten Betrachtungslicht herstellbar ist.

Zur technischen **LÖSUNG** schlägt die Erfindung ein Verfahren mit den Merkmalen des Patentanspruches 1 vor. Die Unteransprüche kennzeichnen weitere Vorteile und Merkmale.

Die Erfindung bringt auch einen neuartigen Proof hervor, gekennzeichnet mit den Merkmalen des Anspruches 5. Auch hier ergeben sich weitere Vorteile und Merkmale aus den Unteransprüchen.

Erfindungsgemäß wird der digitale Proof um einen zusätzlichen Druckbereich ergänzt, welcher wenigstens zwei Flächen aufweist, für welche jeweils eine unterschiedliche Farbe vorgesehen ist. Diese unterschiedlichen Farbbereiche sind eng benachbart, damit man sie gut vergleichen kann, und werden jeweils mit einer Farbe eines metameren Farbensatzes gestaltet.

"Metamer" ist ein Begriff der Farbmetrik und heißt "bedingt gleich". Als metamere Farben werden für ein bestimmtes Licht gleichaussehende, aber auf verschiedenem spektralen Reflexionsverhalten beruhende Farben bezeichnet. Das bedeutet, dass diese Farben unter einer bestimmten Lichtart völlig identisches Farbempfinden bewirken, das heißt voneinander nicht zu unterscheiden sind. Unter einer anderen Lichtart jedoch erzeugen diese Farben ein unterschiedliches Farbempfinden und werden voneinander differenziert wahrgenommen. Im allgemeinen genügt ein Farbenpaar, aber man kann mehr als zwei bedingt gleich erscheinende Farben benutzen, zum Beispiel um die Empfindlichkeit für abweichende spektrale Lichtverteilungen zu erhöhen.

Durch die Ergänzung digitaler Proofs um ein entsprechendes Druckfeld gemäß der Erfindung hat der Nutzer im Vergleich zu herkömmlichen Proofs zusätzlich die Möglichkeit, festzustellen, ob er den Proof unter dem vorgesehenen, den Proof in optimaler Weise authentisierenden Licht betrachtet oder nicht. Ist dies der Fall, erkennt er beispielsweise keinen Unterschied zwischen den metameren Farben in dem entsprechenden Druckbereich. Verwendet er ein nicht vorgesehenes oder ein nicht so optimales Licht, erkennt er einen Unterschied und kann die Farben voneinander abgrenzen. Das heißt, wenn ein Unterschied deutlich erkennbar ist, kann er zuverlässig darauf schließen, dass sein Licht ungeeignet ist. Lückenlos aneinander angrenzende Farbbereiche lassen sich erfahrungsgemäß am besten vergleichen, sie zeigen bereits kleine Unterschiede deutlich.

Gemäß einem erfindungsgemäßen Vorschlag wird ein Druckbereich in zwei aneinandergrenzende Flächen geteilt, etwa in Form von Rechtecken. Diese beiden Flächen werden dann jeweils mit einer der Farben eines metameren Paares bedruckt, so dass diese an der Flächengrenze aneinanderstoßen.

Gemäß einem weiteren vorteilhaften Vorschlag der Erfindung kann auch die eine Druckfläche für die eine Farbe des metameren Paares innerhalb der Druckfläche für die andere Farbe des metameren Paares angeordnet sein. Auf diese Weise lassen sich beispielsweise erfindungsgemäß identifizierbare Zeichen, Logos, Buchstaben, ganze Worte und dergleichen einarbeiten.

Mit der Erfindung wird ein einfaches Verfahren bereitgestellt, mit welchem die Proofs authentisierbar werden.

Darüber hinaus besteht somit grundsätzlich die Möglichkeit, in Form eines Wasserzeichens die Authentizität der Herkunft des Proofs zu identifizieren. Er lässt sich somit einer bestimmen Quelle, beispielsweise einer bestimmten Software oder dergleichen zuordnen, die ein derartiges Feld druckt.

Prinzipiell sind metamere Farbensätze mit den Grundfarben der entsprechenden Farbräume herzustellen. Zunächst kann das menschliche Farbempfinden mit drei Kennzahlen beschrieben werden (etwa Helligkeit, Farbton, Sättigung). Mit drei Grundfarben kann ein gewünschter Farbeindruck durch genau eine Mischung erreicht werden. Um den gleichen Farbeindruck auch mit einer anderen Mischung zu erhalten, braucht man mehr als drei Grundfarben.

Es ist bereits möglich, mit dem Vierfarbendruck (CMYK-Farbraum) metamere Farben herzustellen. Man kann beispielsweise ein Grau allein mit schwarzer Druckfarbe erreichen (bekannt von schwarzweißen Drucken), aber auch mit einer passenden Mischung von Cyan, Magenta und Gelb ohne Schwarz. Übergänge zwischen diesen beiden Extremen können ebenfalls zum gleichen Farbeindruck führen.

Bei der Verwendung von Proof-Druckern mit weiteren Tinten, etwa Orangerot, Grün, Blauviolett, stehen dem Anwender weitere Freiheitsgrade zur Verfügung. So lässt sich zum Beispiel ein Grau aus diesen drei Farben alleine mischen. Ein solches Schwarz-Grau, CMY-Grau und OGV-Grau unterscheiden sich deutlich in ihrem spektralen Reflexionsvermögen, obwohl sie unter einem bestimmten Licht, z.B. D50, den gleichen Farbeindruck liefern. Wegen des unterschiedlichen Reflexionsvermögens erscheinen sie unter einem anderen Licht, z.B. TL84 Bürobeleuchtung, deutlich verschieden.

Weitere geeignete metamere Farben ergeben sich aus den spektralen Charakteristiken von möglichen Farbmischungen eines Proof-Druckers durch Drucken von Kombinationen auf einem vorgegebenen Substrat. Es entstehen Farbtöne, bei denen kleine Farbunterschiede erfahrungsgemäß besonders sichtbar sind. Systematisch werden alle Farbtöne überprüft. Aus der Charakterisierung, gegebenenfalls durch Interpolation, ergeben sich alle Wege, einen solchen Farbton unter dem Referenzlicht zu erhalten. Dabei ergeben sich auch die Reflexionsspektren dieser metameren Farben. Für beliebige andere Lichtquellen mit bekannten spektralen Energieverteilungen ist der pro Licht auftretende Farbunterschied zwischen den metameren Farben bestimmbar. Farbsätze, die die höchsten Farbunterschiede erreichen, machen eine Lichtabweichung besonders deutlich sichtbar.

Weitere Vorteile und Merkmale der Erfindung ergeben sich aus der folgenden Beschreibung anhand der Figuren. Dabei zeigen:
- Fig. 1: Eine Darstellung einer Ausführungsform eines erfindungsgemäßen Druckfeldes und
- Fig. 2: eine Darstellung einer alternativen Ausführungsform eines erfindungsgemäßen Druckfeldes.

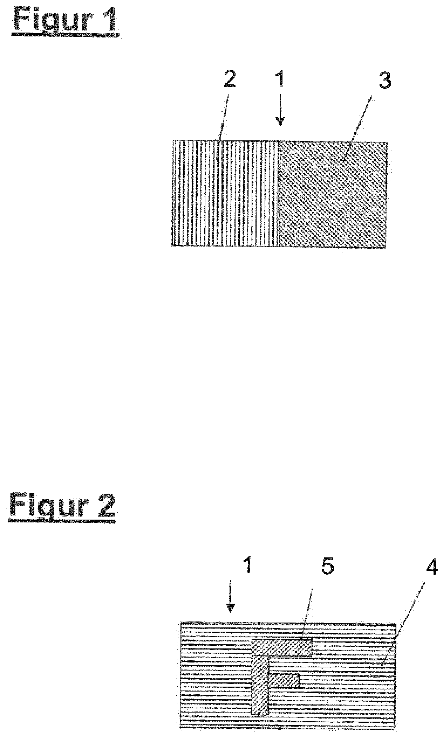

Das Druckfeld 1 gemäß Figur 1 ist in zwei Hälften 2 und 3 aufgeteilt, wobei der Druckbereich 2 mit einer Farbe eines metameren Farbenpaares bedruckt ist, der Druckbereich 3 mit der anderen Farbe des metameren Farbenpaares. An der Mittellinie ergibt sich somit die Berührung. Unter dem richtigen Licht betrachtet erscheint das Druckfeld 1 völlig einheitlich, unter einem anderen Licht sind die Bereiche 2 und 3 voneinander unterscheidbar.

Gemäß Figur 2 ist der Druckbereich 1 flächig mit der Farbe 4 eines metameren Farbenpaares bedruckt. Im gezeigten Ausführungsbeispiel ist der große Buchstabe "F" mitten in diesem Feld mit der anderen Farbe des metameren Farbenpaares bedruckt. Bei richtigem Licht betrachtet sieht der Betrachter nur ein einheitliches Farbenfeld im Druckbereich 1. Bei anderem Licht betrachtet erkennt er das "F", welches beispielsweise für das Wort Falsch steht oder dergleichen.

Die beschriebenen Ausführungsbeispiele dienen nur der Erläuterung und sind nicht beschränkend.

### Bezugszeichen

- 1: Druckfeld
- 2: Farbfeld
- 3: Farbfeld
- 4: Farbfeld
- 5: Farbfeld

## Patentansprüche

1. Verfahren zur Herstellung eines farbverbindlichen Prüfdruckes in Form eines digitalen Proofs, **dadurch gekennzeichnet, dass** in einem vorgegebenen Druckbereich in wenigstens zwei benachbarten Flächen ein Druck mit jeweils einer Farbe eines metameren Farbensatzes eingearbeitet wird.

2. Verfahren nach Anspruch 1, **dadurch gekennzeichnet, dass** der vorgegebene Druckbereich zwei aneinandergrenzende rechteckige Felder umfasst.

3. Verfahren nach einem der vorhergehenden Ansprüche, **dadurch gekennzeichnet, dass** eine der Flächen des Druckbereiches in der anderen Fläche angeordnet wird.

4. Verfahren nach Anspruch 3, **dadurch gekennzeichnet, dass** eine der Flächen ein identifizierbares Zeichen darstellt.

5. Proof, **gekennzeichnet durch** einen Druckbereich, der in wenigstens zwei benachbarten Flächen jeweils eine Farbe eines metameren Farbensatzes aufweist.

6. Proof nach Anspruch 5, **dadurch gekennzeichnet, dass** wenigstens eine der Flächen ein rechteckiges Feld ist.

7. Proof nach einem der vorhergehenden Ansprüche 5 oder 6, **dadurch gekennzeichnet, dass** eine der Flächen in der anderen Fläche angeordnet ist.

8. Proof nach einem der vorhergehenden Ansprüchen 5 bis 7, **dadurch gekennzeichnet, dass** eine der Flächen ein identifizierbares Zeichen ist.

9. Verfahren zur Bestimmung metamerer Farben zur Durchführung eines Verfahrens mit den Merkmalen der Ansprüche 1 bis 4 für einen Proof mit den Merkmalen der Ansprüche 5 bis 8, **gekennzeichnet durch** folgende Schritte:
a) Drucken von Kombinationen der unterschiedlichen Druckfarben eines Prüfdruckers auf einem vorgegebenen Substrat.
b) Messen der spektralen Charakteristiken
c) Ermitteln aller Wege, einen charakterisierten Farbton unter dem Referenzlicht zu erhalten
d) Feststellen der Reflexionsspektren dieser metameren Farben
e) Bestimmung der Farbunterschiede zwischen den metameren Farben auf Basis der bekannten spektralen Energieverteilungen der anderen Lichtarten
f) Auswählen von Farbsätzen mit hohen Farbunterschieden
